# EUROPEAN PATENT APPLICATION

(11) **EP 4 715 229 A1**
(43) Date of publication of application: **25.03.2026**
(21) Application number: 24815646.5
(22) Date of filing: 23.04.2024
(51) Int. Cl.: F16B 39/24, E04B 1/38, F16B 43/00

(54) **LOCKING WEDGE WASHER DEVICE**

(30) Priority: 31.05.2023 JP 2023098809
(71) Applicant: Geo Sekkei Corporation, Chofu-shi, Tokyo 182-0024 (JP)
(72) Inventor: TSUKUI, Takao, Chofu-shi, Tokyo 182-0024 (JP)
(74) Representative: Savi, Massimiliano
(86) International application number: PCT/JP2024/080057
(87) International publication number: WO 2024/248167

(57) **Abstract**

This invention provides an inexpensive anti-loosening wedge washer device that can firmly and permanently prevent loosening caused by aging, such as wood shrinkage, in joints of wooden buildings using bolts and nuts. The device compensates for and prevents screw loosening due to shrinkage of joined members by increasing the washer's thickness. The washer has a truncated cone-shaped lid, and a truncated cone-shaped collar protrudes coaxially with the concave bolt hole. An annular wooden wedge, having a volume larger than that of the tapered annular space inside the washer, is pressed inwardly by screw tightening. The bulging restoring force of the compressed wooden wedge compensates for the shrinkage of the joined members. As a result, gaps caused by wood thinning are absorbed by the increased washer thickness, enabling long-term prevention of loosening in the joint.

## Description

### Technical Field

The present invention relates to an anti-loosening technique for joints using bolts and nuts, specifically relates to a technique for a washer device that prevents loosening due to wood shrinkage in wooden structures over a long term.

### Background of the Invention

Structural joint connections in wooden buildings have evolved from traditional Japanese techniques of timber framing and wedges. Today, simplified pre-cut timber framing methods are mainstream, leading to widespread use of bolt-and-nut reinforcement fittings. Consequently, measures to maintain fastening force between dissimilar materials (wood and metal), such as washers that follow wood shrinkage, have become indispensable. Washers with anti-loosening technology have been developed for this purpose.

Furthermore, with the recent emergence of tall wooden buildings, interest in fastening strength of bolts and nuts protecting structural joints is growing. Consequently, there is a strong demand for more powerful and reliable technologies to prevent loosening caused by wood shrinkage over time.

### Summary of the Invention

### Problem to be Solved by the Invention

The primary factor causing loosening in wood joints is typically wood shrinkage. This drying shrinkage occurs to some extent even with kiln-dried lumber, and while regional variations exist due to climate, it is understood that such pheromone will continue after building completion until the wood stabilizes at approximately 15% equilibrium moisture content.

Consequently, spring washers and rubber washers have long been used as representative anti-loosening washers. However, these exhibit a significant reduction in their counterforce relative to the gap created by the drying shrinkage of the joined members, leading to a problematic sharp decrease in clamping force as wood shrinkage progresses.

Furthermore, while many buildings are designed for long-term use, springs are prone to sagging and susceptible to corrosion, while rubber suffers from degradation and fatigue issues. Particularly in the high-temperature, high-humidity conditions of attics during summer, these phenomena are accelerated. Over time, brittle springs or rubber may detach, triggered by events like earthquakes, potentially exacerbating joint loosening.

To solve the above problems, the present invention aims to provide an inexpensive anti-loosening wedge washer device that does not rely on the repulsive force, which is unstable in fastening force as with washers that use springs or rubber, but instead incorporates traditional wedge technology into a new shape and can maintain a strong and stable fastening force for a long period of time at wood joints that use bolts and nuts.

### Means for Solving the Problems

To achieve the above objective, claim 1 of the present invention relates to a device that compensates for and prevents screw loosening due to shrinkage of the joined members by thickening the washer. The washer has a general shape of a conical cap-shaped washer, and a conical collar is protruding coaxially with the concave-side bolt insertion hole. A ring-shaped wooden wedge, whose volume exceeds that of the annular tapered space formed inside the washer, is press-fitted into this space by the bolt tightening action during fastening. This arrangement enables the shrinkage of the joined members to be compensated for by the bulging restorative force of the ring-shaped wooden wedge stored within the washer.

This device applies the traditional technique of driving wedges into gaps in timber framing to tighten joints as an anti-loosening device for bolt-and-nut joints. By leveraging the synergistic effect of wood's inherent restorative force and the wedge effect, the device compensates for the shrinkage of the joined members by thickening, thereby preventing loosening robustly and persistently over the long term.

In other words, the annular wooden wedge compressed within the tapered internal space of the smooth, truncated cone-shaped cap washer is thicken due to its vertical restoring force relative to the washer seat. Meanwhile, the parallel restoring force to the washer surface is also converted nearly 90 degrees by the wedge principle, becoming an expansion force from the tapered space, further increasing the thickening width. This powerful anti-loosening effect from these combined actions significantly extends the allowable gap range.

In claim 2, the nut is axially and integrally attached to the outer side of the bolt insertion hole of the aforementioned tapered cap-shaped washer.

This makes the washer assembly and nut a single set, reducing installation effort during washer fitting and improving work efficiency.

### Effect of the Invention

The present invention utilizes the restoring action of compressed annular wooden wedges as its driving force. Unlike the rebound force of springs or rubber, the annular wooden wedges compressed within the tapered space of the conical cap-shaped washer exhibit powerful expansion due to the cell permeation of moisture in the air, even beyond their elastic range. Consequently, the reduction in rebound force relative to the gap size is minimal, the supporting force remains nearly constant, and a powerful clamping force can be maintained over a long period.

This is because favorable conditions for restoring the compressed annular wooden wedge occur annually and can be utilized. These conditions involve climate cycles: during the rainy season, moisture is replenished through the joined components that absorb humidity in the high-temperature, high-humidity environment; during winter, condensation water forming on the washer due to the temperature difference between the building interior and exterior can be replenished via the bolt penetrating the joined components.

Furthermore, while conventional wedges risk inducing cracks in the joined members if driven too deeply, the present invention operates solely within the internal confines of the conical cap-shaped washer. This prevents excessive tightening from adversely affecting the joined members. Moreover, the annular wooden wedge remains securely contained within the cap-shaped washer even when subjected to external forces like earthquakes, thus preventing it from falling out. This ensures that the fastening force is maintained safely over a long term.

### Brief Description of the Drawings

Figure 1 is an exploded perspective view showing the first embodiment of the present invention.
Figure 2 is an exploded perspective view showing the first embodiment of the present invention from the bottom side of the washer device.
Figure 3 is a cross-sectional view showing the pre-fastening state within the seat hole in the first embodiment of the present invention.
Figure 4 is a cross-sectional view showing the fastening-completed state within the seat hole in the first embodiment of the present invention.
Figure 5 is a cross-sectional view showing the state of accommodating wood shrinkage within the seat hole in the first embodiment of the present invention.
Figure 6 is an exploded perspective view showing a method utilizing the seat hole bottom as a wedge in the second embodiment of the present invention.
Figure 7 is a cross-sectional view showing a method of utilizing the bottom of the seat hole as a wedge in the second embodiment of the present invention.
Figure 8 is a cross-sectional view showing a state where a nut is axially fitted to the washer in the third embodiment of the present invention.

### Embodiments for Implementing the Invention

### Example 1

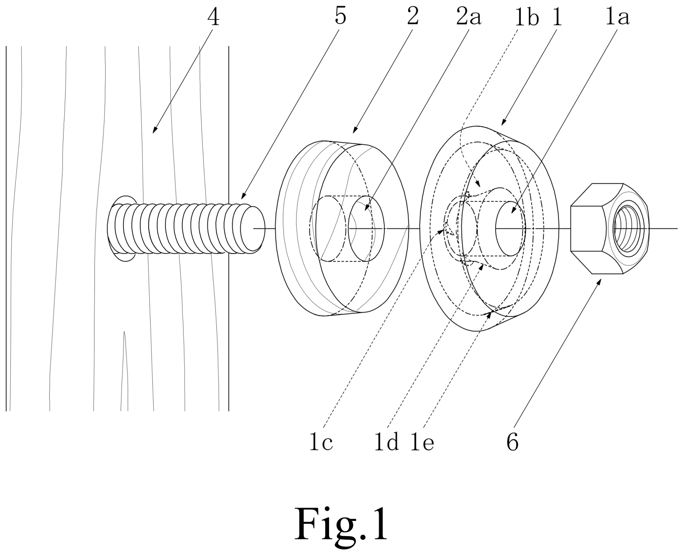

Figure 1 is an exploded perspective view showing the first embodiment of the present invention. It is an exploded illustration showing how a conical cap-shaped washer 1 and an annular wooden wedge 2 are inserted onto a bolt 5 that passes through the joined member 4 and are tightened by a nut 6. Although the washer is shown with a frustum shape in the figure, a similar effect can be achieved with a polygonal frustum shape, provided that a tapered space can be formed inside the washer.

The key component of this device, the frustum-shaped cap washer 1, is made of metal such as iron. It requires sufficient strength to compress the annular wooden wedge 2 and store its expansion restoring force, along with the necessary surface area as a washer. On the other hand, its simple shape allows for mass production with cost control and durability considerations, such as through press molding followed by plating. Alternatively, it can be made of alloys like stainless steel for even greater durability.

Next, the annular wooden wedge 2, which plays a crucial role as the wedge, has an outer diameter approximately equal to the inner diameter of the opening edge of the conical cap-shaped washer 1. It is cylindrical but slightly tapered toward the washer side to facilitate press-fitting into the washer. Its height is approximately 1.5 times the depth of the tapered space within the washer. At its center, it possesses a bolt insertion hole 2a with a diameter nearly identical to the outer end of the tapered collar portion 1b.

The material for the annular wooden wedge 2 can be scrap wood or thinned timber. Widely available flat-sawn lumber can be processed to the required thickness, then cut using a hole saw, avoiding knots and resin pockets, for effective utilization. Similarly, wood chip molding materials or plywood, if untreated and unshaped, can also be expected to provide comparable restoration effects. While species like cypress, possessing both strength and insect/rot resistance, are optimal, using the same wood species as the joined members yields nearly equivalent effects, with insect/rot treatment being able to further enhance durability.

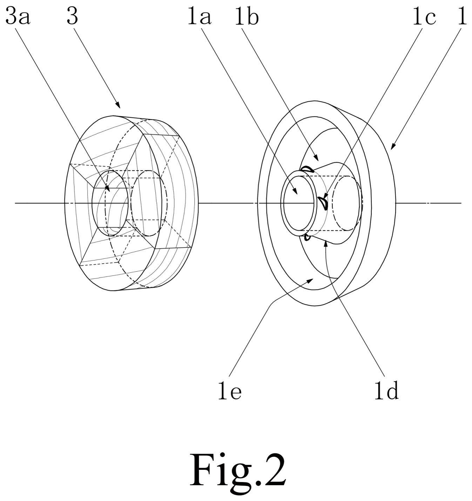

Figure 2 is an exploded perspective view of the first embodiment of the present invention, shown from the bottom side of the washer device. On the inner side of the washer, which corresponds to the concave surface of the tapered cap-shaped washer 1, a tapered annular space is formed between the inner edge tapered surface 1d and the outer edge tapered surface 1e. This space is created by the tapered collar portion 1b, which protrudes coaxially with the bolt insertion hole 1a.

Furthermore, the retaining claw portion 1c, attached to the end side of the tapered collar portion 1b, is a ring-shaped series of small projections for simply connecting various types of annular wooden wedges. The figure shows one example where four projections are inclined to allow screwing, but the projection series may be omitted, and that portion may be simply joined using an adhesive or the like.

Furthermore, the annular linked wedge 3 in Figure 2 is formed by dividing the annular wedge 2 into four equal fan-shaped sections and connecting them annularly so that the grain of the fan-shaped pieces connects squarely. This method is not limited to four equal divisions. By doing so, the direction prone to swelling becomes annular rather than unidirectional like a single plank, resulting in nearly uniform surface pressure around the inner circumference of the washer and more stable performance. Although it increases cost, selecting and effectively utilizing material with high displacement in the tangential direction relative to the growth rings can further enhance its performance.

Furthermore, depending on the application location or purpose, combinations like the reverse pattern of the ring-linked wooden wedge 3, where the grain of the fan-shaped wood pieces connects radially, or using plywood or the heartwood/sapwood of cross-cut lumber for the ring wedge 2, are also conceivable. As long as the wedge utilizes a restorative action like that of a tree, various applications can be created depending on the combination of the taper angle of the seat and the wedge material.

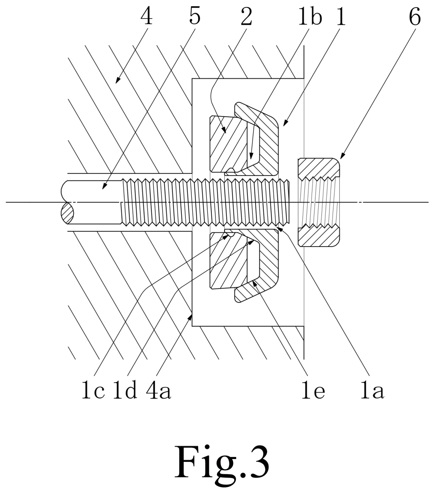

Figure 3 is a cross-sectional view showing the state before fastening within the seat hole in the first embodiment of the present invention. This device is typically connected by screwing locking claw portion 1c at the end of the tapered collar portion 1b into the bolt insertion hole 2a of the annular wooden wedge 2, resulting in the annular wooden wedge 2 being inserted approximately one-third of the way into the interior of the tapered cap-shaped washer 1.

Furthermore, in Figure 3, the taper angle of the annular tapered space formed inside the conical cap-shaped washer 1 is drawn as 50 degrees, while a range of approximately 40 to 60 degrees can achieve substantially similar effects. Nevertheless, the optimal performance varies depending on usage conditions such as wood species and environment, so that it cannot be generalized in one single word.

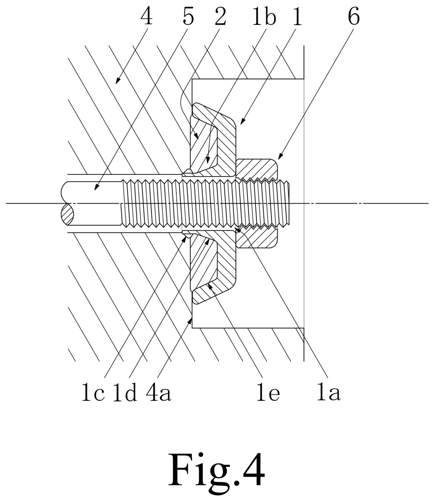

Figure 4 is a cross-sectional view showing the state of fastening completion within the seat hole in the first embodiment of the present invention. Within the seat hole of the joined member 4, it shows the state where the conical cap-shaped washer 1 is tightened with nut 6, and the annular wooden wedge 2 is pressed inwardly with an arbitrarily set torque. As a result, the outer edge of the washer's opening contacts the bottom position 4a of the seat hole, and the locking claw portion 1c penetrates the annular wooden wedge 2 and reaches the bottom position 4a of the seat hole.

In Figure 4, the height of the annular wooden wedge 2 is set to be approximately two-thirds of its pre-compression height at the time of fastening. At this point, the outer edge of the opening of the tapered cap-shaped washer 1 acts as a stopper, causing the wedge to halt at the bottom position 4a of the seat hole. This prevents excessive pressure from damaging the wood cells of the wedge, ensuring no hindrance to its subsequent expansion and recovery action. Furthermore, in the performance design of this device, the height and material of the annular wooden wedge 2 are selected while considering the amount of penetration into the joined members, allowing the clamping torque to be set arbitrarily.

Occasionally, resin may cause adhesion between the washer and the annular wooden wedge after tightening, potentially hindering the bulge recovery action. In such cases, this can be addressed by pre-applying a release agent, such as wax, inside the tapered cap-shaped washer 1, or by interposing a thin sheet-like release layer.

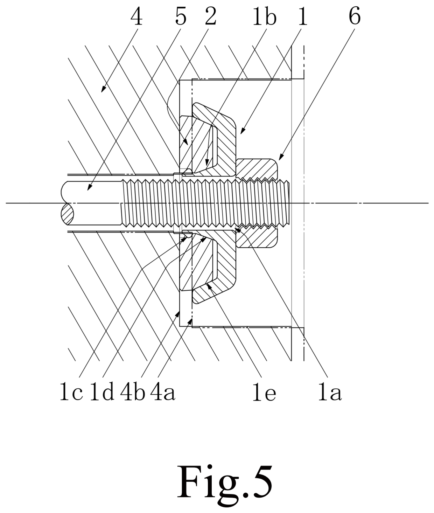

Figure 5 is a cross-sectional view showing the state of adaptation to wood shrinkage within the seat groove in the first embodiment of the present invention. It illustrates the displacement of the device when the original seat groove bottom position 4a has moved to the contracted seat groove bottom position 4b due to drying shrinkage of the joined members over time.

Thus, while slack caused by wood shrinkage occurs as a gap between the outer edge of the opening of the tapered cap-shaped washer 1 and the bottom position 4b of the seat hole after shrinkage, this slack can be eliminated by filling the gap through the thickening of the device, utilizing the bulging restoring force of the interposed annular wooden wedge 2.

Furthermore, the locking claw portion 1c of the tapered cap-shaped washer 1, receiving the pressure during tightening, forms a row of small projections that have penetrated through wood fibers of the bolt insertion hole 2a of the annular wooden wedge 2 while shaving the wood fibers. On the other hand, during bulge recovery, grooves remain, making it easier to remove and thus not hindering the thickening action. This is also true for simple bonding by adhesion. Once detached, it does not form an obstacle.

### Example 2

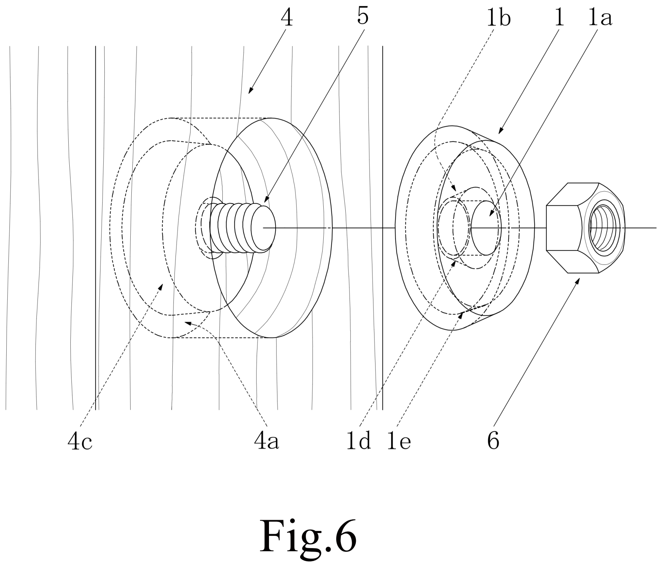

Figure 6 is an exploded perspective view showing the method of the second embodiment of the present invention utilizing the bottom of a socket hole as a wedge. The figure depicts the situation of driving the washer into the wedge, not driving the wedge itself. In this case, the locking claw portion 1c and the annular wooden wedge 2 are unnecessary. Furthermore, by utilizing electric power tools, the annular wooden wedge forming portion 4c can be created during operations not significantly different from normal socket hole drilling. This method is considerably economical because the same effect as the present device can be achieved using only the tapered cap-shaped washer 1.

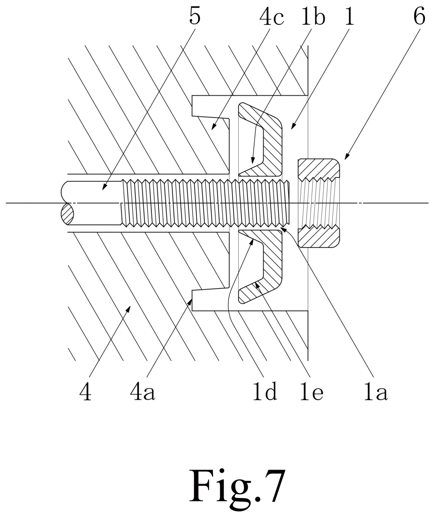

Figure 7 is a cross-sectional view showing the method of utilizing the bottom of the seat hole as a wedge in the second embodiment of the present invention. As shown in the figure, the annular wedge forming portion 4c formed in the bottom of the seat hole has a shape where an additional groove is dug around the bottom of the seat hole, which is shallower than usual. For this operation, using a combination of a drill, a bore bit, and a thick-bladed hole saw arranged coaxially, or a drill fitted with a modified seat-cutting edge tip consisting of two stages (large diameter and small diameter), allows the annular wedge formation section 4c to be efficiently left as a by-product simultaneously with the seat-cutting processing of the joined member 4.

### Example 3

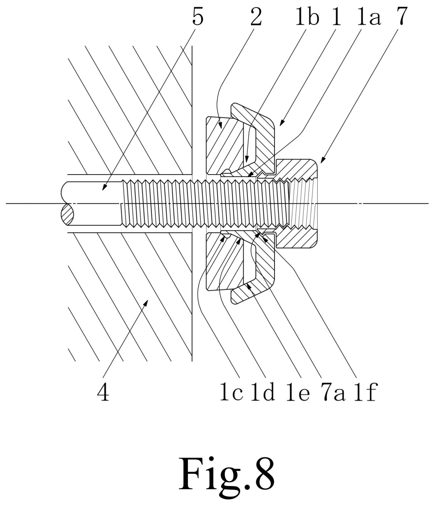

Figure 8 is a cross-sectional view showing the nut axially fitted to the washer in the third embodiment of the present invention. A fitting groove section 1f is added to the bolt insertion hole 1a of the conical cap-shaped washer 1. The fitting protrusion 7a of the connecting nut 7 is fitted onto this groove section 1f, enabling rotatable connection. However, for washers intended for small-diameter bolts, the frictional resistance between the tapered cap-shaped washer 1 and the annular wooden wedge 2 is not strong enough to stop normal tightening rotation. Therefore, the washer and nut may be formed as an integral unit.

### Explanations of Reference Numerals

- 1: conical cap-shaped washer
- 1a: bolt insertion hole
- 1b: tapered collar portion
- 1c: locking claw portion
- 1d: inner edge tapered surface
- 1e: outer edge tapered surface
- 1f: shaft attachment groove portion
- 2: annular wooden wedge
- 2a: bolt insertion hole
- 3: annular connecting wooden wedge
- 3a: bolt insertion hole
- 4: joined member
- 4a: seat hole bottom position
- 4b: seat hole bottom position after shrinkage
- 4c: annular wooden wedge forming portion
- 5: bolt
- 6: nut
- 7: connecting nut
- 7a: shaft attachment protrusion

## Claims

1. An anti-loosening wedge washer device that compensates for and prevents screw loosening caused due to shrinkage of the joined member, by thickening the washer, wherein the washer has a conical cap-shaped configuration, with a tapered collar protruding coaxially with the concave-side bolt insertion hole, and with an annular tapered space formed within the washer, the annular tapered space is pre-filled with an annular wooden wedge exceeding its inner volume, which is pressed inwardly by the bolt tightening action during fastening, thereby enabling the shrinkage of the joined members to be compensated by the bulging restoring force of the annular wooden wedge stored within the washer.

2. The anti-loosening wedge washer device according to claim 1, **characterized in that** a nut is axially fitted and integrally formed on the outer side of the bolt insertion hole of the conical cap-shaped washer.
